# EUROPÄISCHE PATENTSCHRIFT

(11) **EP 3 467 008 B1**
(45) Veröffentlichungstag und Bekanntmachung des Hinweises auf die Patenterteilung: **26.02.2025**
(21) Anmeldenummer: 18191938.2
(22) Anmeldetag: 31.08.2018
(51) Int. Cl.: C08J 3/00, C08J 5/00

(54) **POLYSACCHARID-AEROGEL-VERSTÄRKTE KUNSTSTOFFE**
POLYSACCHARIDE AEROGEL REINFORCED PLASTICS
MATIÈRES PLASTIQUES RENFORCÉES PAR UN AÉROGEL À BASE DE POLYSACCHARIDES

(30) Priorität: 05.10.2017 DE 102017123123
(43) Veröffentlichungstag der Anmeldung: 10.04.2019
(73) Patentinhaber: Deutsches Zentrum für Luft- und Raumfahrt e.V., 51147 Köln (DE)
(72) Erfinder: Schestakow, Maria, 40599 Düsseldorf (DE); Ratke, Lorenz, 53757 Sankt Augustin (DE); Milow, Barbara, 50354 Hürth (DE)
(74) Vertreter: dompatent von Kreisler Selting Werner - Partnerschaft von Patent- und Rechtsanwälten mbB

(56) Entgegenhaltungen:
- WO-A1-2015/055338
- DE-A1- 102004 060 261
- US-A1- 2007 259 169
- PIRCHER N ET AL: "Reinforcement of bacterial cellulose aerogels with biocompatible polymers", CARBOHYDRATE POLYMERS, APPLIED SCIENCE PUBLISHERS, LTD. BARKING, GB, vol. 111, 21 April 2014 (2014-04-21), pages 505 - 513, XP029035823, ISSN: 0144-8617, DOI: 10.1016/J.CARBPOL.2014.04.029
- TUUKKA NISSILÄ: "ORIENTED NANOFIBER TEMPLATES FOR RESIN IMPREGNATION OF CELLULOSE NANOCOMPOSITES", 31 December 2016 (2016-12-31), pages 1 - 108, XP055561727, Retrieved from the Internet <URL:http://jultika.oulu.fi/files/nbnfioulu-201701121049.pdf> [retrieved on 20190226]
- ZHAI TIANLIANG ET AL: "Poly(vinyl alcohol)/Cellulose Nanofibril Hybrid Aerogels with an Aligned Microtubular Porous Structure and Their Composites with Polydimethylsiloxane", APPLIED MATERIALS & INTERFACES, vol. 7, no. 13, 30 March 2015 (2015-03-30), US, pages 7436 - 7444, XP093029155, ISSN: 1944-8244, DOI: 10.1021/acsami.5b01679

## Beschreibung

Die vorliegende Erfindung betrifft Kunststoffe, die mit Polysaccharid-Aerogel verstärkt sind sowie Verfahren zu deren Herstellung. Insbesondere werden Kunststoffe bereitgestellt, die mit Polysaccharid-Aerogel-Fasern in Form dreidimensionaler Netzwerke verstärkt sind, wobei das Polysaccharid-Aerogel und der Kunststoff form- und kraftschlüssig verbunden sind und der Verbundkörper frei von Lufteinschlüssen ist. Bevorzugt handelt es sich bei dem Polysaccharid um Cellulose.

Faser-Kunststoff-Verbunde (FKV) bestehen aus mindestens zwei Komponenten, deren Kombination idealerweise die besten Eigenschaften beider Einzelkomponenten zeigt. Konventionelle Fasermaterialien sind beispielsweise Glas- oder Carbonfasern als verstärkende Komponenten, sowie einem die Fasern umhüllenden Matrixmaterial bei dem meist Kunststoffharze verwendet werden, wobei faserverstärkte Kunststoffe wie glasfaserverstärkte Kunststoffe (GFK) und carbonfaserverstärkte Kunststoffe (CFK) erhalten werden.

Im Zuge des wachsenden Interesses an erneuerbaren Rohstoffen rücken Naturfasern nicht nur als Füllstoffe, sondern auch als verstärkende Komponenten zunehmend in den Fokus wissenschaftlicher Bestrebungen. Eine bedeutende Gruppe von Naturfasern bilden hierbei die Polysaccharide, deren wichtigster Vertreter die Cellulose ist.

WO 2015/055338 A1 beschreibt die Benetzung von Fasermatten mit Aerogelfasern. In Pirchner, N et al.: "Reinforcement of bacterial cellulose aerogels with biocompatible polymer" wird bakterielle Cellulose verwendet, deren Verhältnis von Feststoff zu Hohlraum eindeutig nicht unter den Begriff Aerogel fällt.
Tuukka, Nissilä: "Oriented nanofiber templates for resin impregnation of cellulose nanocomposites", 31. Dezember 2016 (2016)-12-31), Seiten 1-108, XP055561727, zu finden im Internet unter http://jultika.oulu.fi/files/nbnfioulu-201701121049.pdf und
Zhai, Tianlang et al.: "Poly(vinyl alcohol)/Cellulose nanofibrill hybrid aerogels with an aligned microtubular prous structure and their composites with polydimethylsiloxane" Applied Material & Interfaces, Bd. 7, Nr.13, 30. März 2015 (2015-03-30), Seiten 7436-7444, XP093029155
Beschreiben die Infiltration von Nano-Cellulosefasern mit Polymeren. Dabei werden gerichtete unidirektionale Strukturen gebildet.

Dabei liegt ein wissenschaftlicher Fokus zunehmend auf der Herstellung von Cellulose-basierten Nanokompositen. Cellulose ist ein vielversprechender nachwachsender Rohstoff mit hoher Festigkeit (bis zu 150 MPa) bei einer verhältnismäßig geringen Dichte (etwa 1,5 g/cm³).

Beurteilt man die Festigkeit und Steifigkeit dieser Werkstoffe unter Berücksichtigung ihrer geringen Dichte, wären Verbunde von Polysacchariden wie Cellulose mit geeigneter Matrix hinsichtlich ihrer spezifischen Festigkeiten/Steifigkeiten konkurrenzfähig gegenüber konventionellen Verbunden. Einige Vergleichswerte sind in Tabelle 1 aufgelistet.

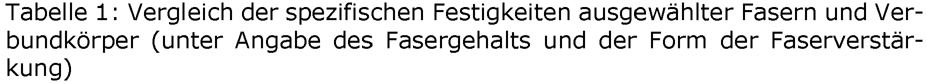

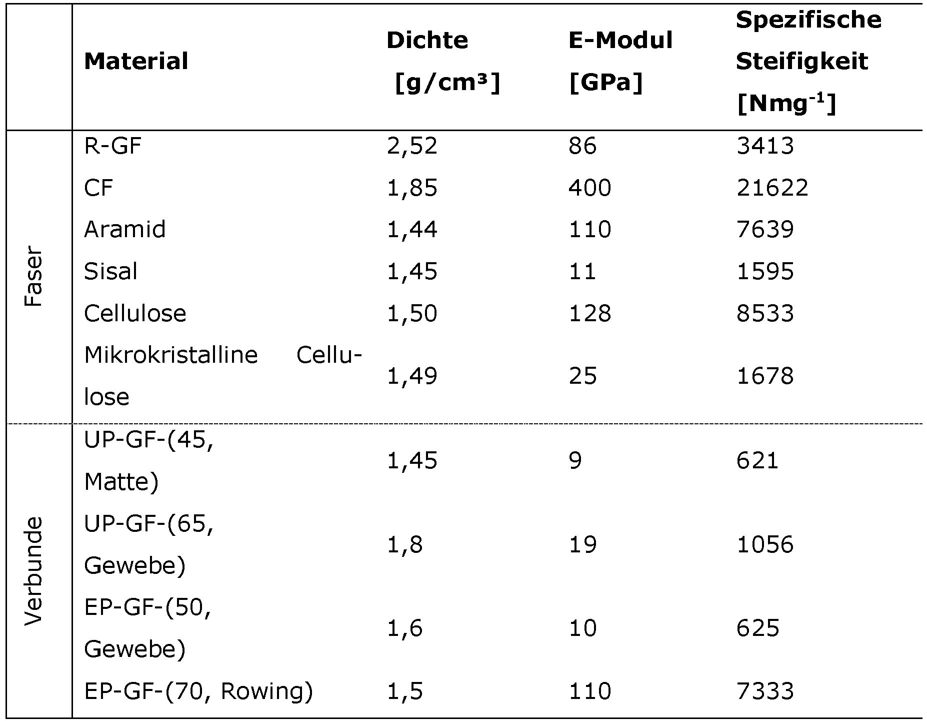

Seit einigen Jahren werden in der Literatur neuartige Nano-Komposite auf Basis von Cellulose und thermoplastischen Kunststoffsystemen beschrieben, beispielsweise von Dufresne (Dufresne, Nanocellulose: a new ageless bionanomaterial, Materials Today, 16, 6, (2013) 220-227) und Oksman (Oksman et al., Review of the recent developments in cellulose nanocomposite Processing, Composites: Part A 83 (2016) 2-18).

Bei der Verarbeitung von Thermoplasten ist die Temperatur ein entscheidender Faktor, denn eine hohe Temperatur führt häufig zum Abbau oder mindestens zur Beeinträchtigung der ursprünglichen Eigenschaften der Cellulose und somit auch zu minderwertigen Verbundkörpern, wie Lee (K.-Y. Lee et al., On the use of nanocellulose as reinforcement in polymer matrix composites, Composites Science and Technology 105 (2014) 15-27) und auch das Handbook of Nanocellulose and Cellulose Nanocomposites ausführen (Kargarzadeh (Editor), Ahmad (Editor), Thomas (Editor), Dufresne (Editor), Handbook of Nanocellulose and Cellulose Nanocomposites (2017).

Auch die Einarbeitung in duroplastische Kunststoffe wird beispielsweise von Sabo (Sabo et al., Characterization and Processing of Nanocellulose Thermosetting Composites, Buchkapitel in, "Technological advancement in polymer nanocomposites of cellulose nanoparticle: processing, performance and applications, (2015) 265-287) und Ramamoorthy (Ramamoorthy, Properties and performance of regenerated Cellulose Thermoset Biocomposites, Phd-Thesis, University of Boras, Schweden (2015)) beschrieben. Diese erfolgt dabei bisher hauptsächlich in Form von Pulvern. Aufgrund des Dichteunterschieds zwischen Faser und duroplastischem Matrixmaterial ergibt sich jedoch das Problem, dass häufig Sedimentation der Fasermaterialien auftritt. Die bisher im Stand der Technik verfolgten Ansätze führen damit sowohl für Thermoplaste als auch für Duroplaste nicht zur Bereitstellung homogener Verbundkörper.

In einer Arbeit von Pircher (Pircher et al., Reinforcement of bacterial cellulose aerogels with biocompatible polymers, Carbohydrate Polymers, 111 (2014) 505-513) wird die Einbringung von bakteriellen Cellulose-Aerogelen in das biokompatible thermoplastische Polymer der Polymilchsäure (PLA), Polycaprolacton (PCL), Cellulose-Acetat und Polymethylmethacrylat (PMMA) beschrieben. In dieser Arbeit wird mit verdünnten Lösungen gearbeitet, wobei das Ziel verfolgt wird, das cellulosische Substrat anschließend zu entfernen, um ein inverses thermoplastisches Gel zu erhalten.

Verfahrenstechnisch wird dies erreicht, indem ein Porenflüssigkeitsaustausch im nassen Zustand der bakteriellen Cellulose durchgeführt wird und anschließend eine überkritische Trocknung stattfindet. Hierbei werden bereits fertige Polymere eingesetzt und anschließend die Cellulose mithilfe eines Lösungsmittels entfernt. Auf diese Weise wird das angestrebte inverse thermoplastische Gel erhalten.

Faserverstärkte Kunststoffe zeigen gerade im Herstellungsprozess einige Schwierigkeiten. Die Herstellung über Resin Transfer Moulding (RTM) oder Resin Infusion Moulding (RIM) birgt immer die Gefahr einer unvollständigen Füllung der Porenräume, was im finalen Bauteil in Form von Lufteinschlüssen zu Sollbruchstellen führen kann. Bei der Einarbeitung von Cellulose in Form von nano- oder mikrokristalliner Cellulose weist Dufresne (Dufresne, Nanocomposites based on natural fibers, Buchkapitel 6 in Natural Fibre Reinforced Polymer Composites: From Macro to Nanoscale eds. Sabu, Pothan (2009) 142-165) auf die Problemstellung der Sedimentation hin, welche zu einer inhomogenen Eigenschaftsverteilung führt.

Faserverstärkung von Kunststoffen kann in unterschiedlichen Arten vorliegen, zum Beispiel als Kurzfaserverstärkung oder Endlosfaserverstärkung. Doch keine dieser Verstärkungen bildet ein stoffschlüssiges Fasersystem, welches in alle drei Raumrichtungen wirkt.

Glasfaserverstärkte Kunststoffe (GFK) und carbonfaserverstärkte Kunststoffe (CFK) werden im Falle der Endlosfasern immer in Gelegen oder Geweben angewendet und zeigen nur in Faserlaufrichtung herausragende Eigenschaften. Befindet sich die Belastungsachse senkrecht zur Faserrichtung werden die Kräfte vorwiegend von der Matrix aufgenommen. Eine Verbesserung wird dabei durch aufeinander gestapelte und im Winkel versetzte Lagen erzielt.

Sowohl Glas- als auch Carbonfasern bedürfen zwingend einer Vorbehandlung beziehungsweise der Applikation eines Haftvermittlers, welcher die Verträglichkeit zwischen der Faser und der Matrix verbessert oder überhaupt erst ermöglicht. Erst diese Vorbehandlung verbessert die Kraftübertragung von der Matrix auf das hochmodulare Fasermaterial. Auch für nanokristalline Cellulose sind chemische Modifikationen gelegentlich notwendig, um eine bessere Verträglichkeit zwischen Faser und Matrix zu gewährleisten, wie von Dufresne (Dufresne, Nanocomposites based on natural fibers, Buchkapitel 6 in Natural Fibre Reinforced Polymer Composites: From Macro to Nanoscale eds. Sabu, Pothan (2009) 142-165) dokumentiert ist.

Gegenüber dem dargestellten Stand der Technik liegt der vorliegenden Erfindung daher die Aufgabe zugrunde, stabile Verbundkörper bereitzustellen, die keine oder nur geringste Lufteinschlüsse (nanoskalig, weniger als 5 nm Durchmesser) aufweisen, deren Eigenschaften möglichst homogen und richtungsunabhängig (anisotrop) sind und die zudem auf nachwachsenden Rohstoffen basieren. Insbesondere sollen solche Verbunde aus Naturfasern und thermoplastischen oder auch duroplastischen Kunststoffen bereitgestellt werden.

Als Polysaccharid-Aerogel kann jedes Polysaccharid in aerogeler Form eingesetzt werden. Insbesondere können Amylose, (Amylo)Pektin, Pektine, Chitin, und/oder Cellulose eingesetzt werden. Bevorzugt wird Cellulose-Aerogel eingesetzt. Als Kunststoff können insbesondere Duroplaste oder Thermoplaste eingesetzt werden.

Das Polysaccharid-Aerogel liegt bevorzugt in Form von offenporigen Fasern, makroskopisch insbesondere in Form zweidimensionaler textiler Gebilde wie Vliesen und/oder Geweben und/oder in Form eines nanoskaligen dreidimensionalen Netzwerks vor. Besonders bevorzugt liegt ein solches dreidimensionales Netzwerk von Cellulose-Aerogel vor. Die Fasern weisen bevorzugt Durchmesser von 5 bis 25 nm auf. Geeignete Fasern sind beispielswiese in DE 10 2006 049 179 1 beschrieben.

Gegenüber dem Stand der Technik zeichnet sich der erfindungsgemäße Verbundkörper insbesondere dadurch aus, dass die Faserkomponente des Verbundmaterials auf Polysaccharidbasis in Form eines Aerogels vorliegt. Durch die stoff- und kraftschlüssige Verbindung zwischen Verstärkungsfaser und Matrix wird die Stabilität des Verbundkörpers gewährleistet.

Überraschenderweise hat sich gezeigt, dass die für GFK und CFK zwingend erforderliche Applikation eines Haftmittlers vermieden werden kann, denn Polysaccharide beinhalten verschiedene funktionelle Gruppen, die in der Lage sind, Reaktionen mit dem Matrixmaterial aus Kunststoff einzugehen. Daraus ergibt sich die Möglichkeit der Ausbildung einer chemischen Bindung zwischen Faser- und Matrixmaterial über die eine Kraftübertragung gewährleistet werden kann. Auch die beispielsweise bei nanokristallinen Cellulose-Wiskern erforderliche chemische Modifizierung ist insbesondere bei Einsatz von Cellulose-Aerogel nicht zwingend notwendig.

Anstelle versetzter Faserlagen kann bei Aerogelen ein ungeordnetes dreidimensionales Netzwerk genutzt werden, welches in allen drei Raumrichtungen identische Eigenschaften aufweist. Werden hingegen geordnete textile Flächengebilde wie Gewebe eingesetzt erfolgt die Kraftaufnahme des Verbundkörpers gerichtet.

Durch den Einsatz eines Polysaccharids mit aerogeler Struktur kann überraschenderweise auch die Sedimentation von Fasern vermieden werden, wodurch eine inhomogene Eigenschaftsverteilung unterbunden werden kann. Die verstärkende Komponente (zum Beispiel Cellulose-Aerogel) liegt in Form eines Polysaccharid-Aerogels bereits in ihrer finalen Morphologie vor und löst sich nicht in der Matrix. Die nanoskaligen Fasern befinden sich in einem festen dreidimensionalen Netzwerk und können in der während der Herstellung flüssigen Matrix trotz des Dichteunterschieds nicht als einzelne Fasern absinken.

Das dreidimensionale Netzwerk des Polysaccharid-Aerogels ist stoff- und kraftschlüssig, denn dort, wo sich zwei und mehr Nanofibrillen berühren besteht eine chemische Bindung. Ein Abgleiten zweier Fasern ist somit nicht möglich.

Zudem hat sich überraschenderweise gezeigt, dass insbesondere Cellulose-Aerogele in der Lage sind, während des Herstellungsprozesses des Verbundkörpers eine Polymerisationsflüssigkeit mit hinreichender Viskosität durch Kapillarkräfte in den Porenraum zu befördern. Damit reduziert sich die Menge an Sollbruchstellen und somit auch Ausschuss. Ein wichtiges Unterscheidungskriterium von den Methoden des Standes der Technik ist die Ausnutzung der Kapillarkräfte, welche sich aus den geringen Porengrößen (20 bis 200 nm) in Cellulose-Aerogelen ergeben. Durch dieses feine Porennetzwerk ist das Cellulose-Aerogel in der Lage auch ohne Anlegen von Unterdruck, nur unter Nutzung der entstehenden Kapillarkräfte eine Polymerisationsflüssigkeit aufzunehmen und so einen blasenfreien Verbundkörper zu realisieren. Insbesondere mithilfe der zur Detektion von Gaseinschlüssen in faserverstärkten Verbundkörpern standardmäßig verwendeten Ultraschallverfahren finden sich in den erfindungsgemäßen Verbundkörpern nachweislich keine Gaseinschlüsse.

Das dreidimensionale Netzwerk, gepaart mit den thermischen Eigenschaften des Polysaccharids, insbesondere der Cellulose, kann am Ende der Produktlebenszeit zusätzlich einen verhältnismäßig simplen Abbau des erfindungsgemäßen Verbundkörpers ermöglichen. Setzt die thermische Zersetzung des Polysaccharid-Kunststoffverbunds ein, so liefert das Fasermaterial Sauerstoff, welcher einen einfachen Abbau mit weniger schädlichen Abbauprodukten zur Folge haben kann. Insbesondere ist ein einfacher thermischer Abbau von Cellulose-Kunststoffverbunden mit weniger schädlichen Abbauprodukten möglich.

In einer bevorzugten Ausführungsform ist der erfindungsgemäße Verbundkörper frei von Lufteinschlüssen und/oder Lösungsmitteln. Die Freiheit von Lufteinschlüssen wird erreicht, indem die Porenräume des Polysaccharid-Aerogels vollständig durch Kunststoffmaterial ausgefüllt werden. Dadurch wird die Entstehung von Sollbruchstellen vermieden und somit die Stabilität des erfindungsgemäßen Verbundkörpers verbessert.

In einer Ausführungsform des erfindungsgemäßen Verbundkörpers handelt es sich bei dem eingesetzten Kunststoff um einen Thermoplasten. Insbesondere Acrylate, Polyamide, Lactide, Polystryole und/oder Polycarbonate können als thermoplastische Kunststoffe eingesetzt werden.

Geeignete Acrylate umfassen beispielsweise Polymethylmethacrylat und Polyacrylsäure, ohne dass die Erfindung auf diese beschränkt wäre. Geeignete Polyamide umfassen beispielsweise PA-6, PA-6,6, PA-8, PA-12 und dergleichen, ohne dass die Erfindung auf diese beschränkt wäre. Geeignete Lactide umfassen beispielsweise Polymilchsäure ohne darauf beschränkt zu sein.

Überraschenderweise hat sich gezeigt, dass, insbesondere wenn Acrylate wie Polymethylmethacrylat als thermoplastische Kunststoffkomponente und Cellulose als aerogeles Fasermaterial eingesetzt werden, ein optisch in flüssiger Phase transparenter und in fester Phase transluzenter Verbundkörper erhalten werden kann. Durch die Feinporigkeit bei geringen Fasergehalten des aerogelen Netzwerks bleiben die transparenten Eigenschaften des eingesetzten Kunststoffs erhalten. In einer bevorzugten Ausführungsform kann der erfindungsgemäße Verbundkörper transparent oder transluzent vorliegen, liegt bei erhöhten Saccharid-Konzentrationen (von mehr als 4 Gewichts-%) jedoch opak bis weißlich vor.

In einer alternativen Ausführungsform des erfindungsgemäßen Verbundkörpers handelt es sich bei dem eingesetzten Kunststoff um einen Duroplasten.

Insbesondere Epoxidharze, Phenol-Formaldehyd-Harze, Melamin-Formaldehyd-Harze, gesättigte und/oder ungesättigte Polyesterharze, Cyanacrylate und/oder Polyurethane können als duroplastische Kunststoffe eingesetzt werden.

Die der Erfindung zugrundeliegende Aufgabenstellung wird gelöst durch ein Verfahren nach Anspruch 1.

Das erfindungsgemäße Verfahren zeichnet sich insbesondere dadurch aus, dass ein bereitgestelltes Polysaccharid-Aerogel, insbesondere ein Cellulose-Aerogel, mit einer Polymerisationsflüssigkeit infiltriert wird und der Verbundkörper anschließend durch Polymerisation, Polyaddition beziehungsweise Polykondensation dieser Flüssigkeit gebildet wird. Dadurch kann die Polymerisationsflüssigkeit stoffschlüssig in das Aerogelnetzwerk eindringen. In den aus dem Stand der Technik bekannten Verbunden aus Polysacchariden und Kunststoffen wird demgegenüber vorgefertigtes Polymer in einem Lösungsmittel mit dem Polysaccharid in Verbindung gebracht und das Lösungsmittel anschließend entfernt, wodurch kein kraft- und stoffschlüssiger Verbund erhalten wird. Überraschenderweise hat sich gezeigt, dass ein solcher mit dem erfindungsgemäßen Verfahren realisiert werden kann.

Bei der Polymerisationsflüssigkeit kann es sich beispielsweise um flüssige polymerisierbare Monomere oder vorkondensierte Oligomere, optional verdünnt in einem geeigneten Lösungsmittel, handeln. Die Polymerisationsflüssigkeit kann zur Synthese eines thermoplastischen oder duroplastischen Kunststoffs geeignet und bestimmt sein.

Als Polymerisationsverfahren können kationische, anionische und/oder radikalischen Verfahren mittels Radikalstarter und/oder IR,UV-Starter zum Einsatz kommen.

Während der Durchführung des Verfahrens wird die Temperatur bevorzugt unter 250 °C gehalten. Besonders bevorzugt liegt die Temperatur unter 180 °C. Ganz besonders bevorzugt liegt die Temperatur unter 150 °C.

In einer bevorzugten Ausführungsform des erfindungsgemäßen Verfahrens wird das Polysaccharid-Aerogel in Form von Fasern, insbesondere in Form zweidimensionaler textiler Gebilde wie Vliesen und/oder Geweben und/oder in Form eines dreidimensionalen Netzwerks bereitgestellt. Besonders bevorzugt wird ein Cellulose-Aerogel in Form eines dreidimensionalen Netzwerks bereitgestellt. Die Fasern weisen bevorzugt Durchmesser in einem Bereich von 5 bis 25 nm auf.

Bevorzugt ist die Polymerisationsflüssigkeit frei von Lösungsmitteln. In einer bevorzugten Ausführungsform umfasst die Polymerisationsflüssigkeit niedrigviskose Monomere, Oligomere und/oder Vorkondensate. Besonders bevorzugt ist die Polymerisationsflüssigkeit frei von Polymeren. Bevorzugte Oligomere umfassen mehr als 10 Monomereinheiten und beispielsweise bis zu 30 Monomereinheiten. Bevorzugt weist die Polymerisationsflüssigkeit eine Viskosität von weniger als 100 Pa·s auf. Besonders bevorzugt liegt die Viskosität bei weniger als 10 Pa·s, ganz besonders bevorzugt weniger als 1 Pa·s.

Im Folgenden wird das Verfahren beispielhaft für den Einsatz von Cellulose-Aerogel als Polysaccharid-Aerogel konkreter beschrieben, wobei das erfindungsgemäße Verfahren nicht auf diese Beschreibung beziehungsweise solche Aerogele beschränkt ist. Die Vorgehensweise kann sich danach unterscheiden, ob Duroplaste oder Thermoplaste als Kunststoff eingesetzt werden sollen.

Das erfindungsgemäße Verfahren kann für Duroplaste beispielsweise wie im Folgenden beschrieben ausgeführt werden. Trockene Cellulose-Aerogele aller Formen (Platten, Fasern, et cetera) werden in einer Form platziert und mit einem vorkondensierten Harzsystem (Phenol-, Epoxid-, Polyester-, Polyesterurethan-, Cyanacrylatester-basiertes Harzsystem, verdünnt mit geeigneten Lösungsmittel oder in reiner Form) getränkt. Anwendbare Verfahren zur Infiltration von Cellulose-Aerogelen sind beispielsweise Resin Infusion Moulding (RIM) und Resin Transfer Moulding (RTM), welche für CFK/GFK ebenfalls angewendet werden. Bedingt durch die offenporige Struktur des Cellulose-Aerogels besteht zudem die Möglichkeit der Kapillarinfiltration, welche keiner weiteren Hilfsmittel bedarf beziehungsweise allenfalls einer Temperaturerhöhung, welche der Prozessbeschleunigung dienlich ist. Im RIM ist der Einsatz diverser Membran-Materialien, Fließhilfen und Folien empfehlenswert, um vollständige Infiltration zu ermöglichen. Sofern eine hinreichend niedrige Viskosität (insbesondere weniger als 100 Pa·s) gegeben ist wird der gesamte Porenraum des Aerogels mit dem Matrixsystem gefüllt. Gegebenenfalls ist eine Temperaturerhöhung notwendig, um das Fließverhalten im Aerogel zu begünstigen. Die Nutzung vakuumassistierter Methoden (RIM sowie damit genutzte Folien, Fließhilfen et cetera) ebenso wie eine Temperaturerhöhung verkürzen die Herstellungszeit blasenfrei infiltrierter Aerogele. Eingesetzte Harzsysteme müssen lange Topf/Offenzeiten (auch bei erhöhter Temperatur) haben, um die vollständige Infiltration zu gewährleisten. Bevorzugte Topfzeiten liegen zwischen 30 und 300 Minuten. Je geringer die Viskosität desto kürzer kann die Topfzeit gewählt sein. Dabei ist die verkürzte Topfzeit bei erhöhter Temperatur oder gegebenenfalls enthaltene Lösungsmittel, die bei Anlegen von Unterdruck evaporieren, zu beachten. Nach erfolgter Gelation, Härtung und gegebenenfalls notwendiger Nachhärtung (curing) wird ein mit Polysaccharid-Aerogel, insbesondere Cellulose-Aerogel, nanofaserverstärkter Verbundkörper erhalten. Das erfindungsgemäße Verfahren kann bei Temperaturen von bis zu 180 °C durchgeführt werden, ohne nennenswerte Veränderungen im Nanofaser-Werkstoff hervorzurufen.

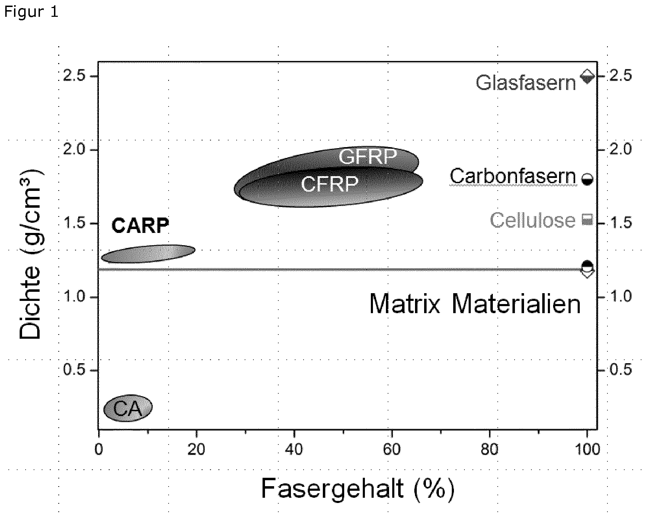

Die Verbundkörper zeichnen sich im Vergleich zu Glas- oder Carbonfasern durch eine geringe Dichte sowie einen geringen Fasergehalt aus. In Figur 1 ist ein Vergleich der Dichten von aktuellen Materialien mit erfindungsgemäßen Cellulose Aerogel-verstärkten Duroplasten in Abhängigkeit der üblich verwendeten Fasergehalte. (GFRP: glasfaserverstärkte Kunststoffe, CFRP: carbonfaserverstärkte Kunststoffe, CA: Cellulose Aerogel, CARP: erfindungsgemäße Celluloseaerogelfaserverstärkte Kunststoffe) gezeigt.

Die Eigenschaften dieses erfindungsgemäßen Verbundkörpers unterscheiden sich deutlich von denjenigen der einzelnen Komponenten. Cellulose-Aerogele selbst zeigen verhältnismäßig schlechte mechanische Eigenschaften, was sich aus dem Umstand ergibt, dass sie überwiegend aus Luft bestehen. Mit einer Porosität zwischen 65% und 98% wird mit sehr geringen Feststoffgehalten gearbeitet. Die E-Module von Cellulose-Aerogelen (1 bis 10 Gewichts-%), welche aus wässrigen Salzhydratschmelzen hergestellt wurden, liegen im Bereich von 10 bis 280 MPa und zeigen eine starke Abhängigkeit vom Feststoffgehalt.

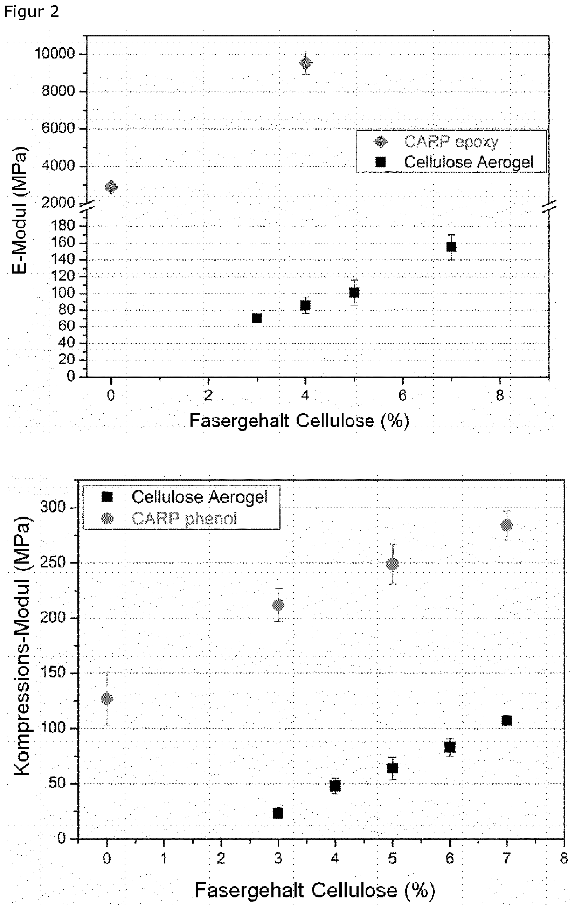

Figur 2 zeigt die mechanischen Eigenschaften zweier erfindungsgemäßer duroplastischer CARPs. In der oberen Hälfte sind die Kompressions-Moduli aus Druckprüfung mit Phenolharzmatrix gezeigt, während in der unteren Hälfte E-Moduli aus Zugprüfung mit Epoxydharzmatrix dargestellt sind.

Aus weiteren Untersuchungen geht hervor, dass in Bezug auf die Wasseraufnahme trotz der enthaltenen teils hygroskopischen Polysaccharide keine Änderung im Vergleich zu dem reinen Matrixsystem zu verzeichnen ist.

Das erfindungsgemäße Verfahren kann für Thermoplaste beispielsweise wie im Folgenden beschrieben ausgeführt werden. Mit hinreichend niedrigviskosen Medien (weniger als 100 Pa·s) lässt sich das feinporige Aerogelnetzwerk füllen. Trockene Cellulose-Aerogele aller Formen (Platten, Fasern, et cetera) werden mit Monomeren thermoplastischer Kunststoffe (Amide, Acrylate, VinylVerbindungen, Ester, Lactate, Carbonate, Etheretherketone, et cetera) getränkt. Innerhalb kürzester Zeit erfolgt bereits durch Kapillarkräfte die Aufnahme der Monomere/Polymerisationsflüssigkeit in den Aerogel-Porenraum. Nach anschließender Polymerisation im Porenraum wird ein thermoplastischer Aerogel-Verbundkörper erhalten. Das Einbringen des stoff- und kraftschlüssigen Netzwerks bedingt deutliche Änderungen der Eigenschaften der jeweiligen Thermoplaste. So wird beispielsweise der Glaspunkt der eingesetzten Thermoplaste signifikant erhöht. Am Beispiel von Cellulose-Aerogel-Polystyrol-Verbundkörpern mit einem Cellulosegehalt von 3 Gewichts-% zeigt sich eine Erhöhung der Glastemperatur im zweistelligen Prozentbereich. Ähnliches Verhalten im vergleichbaren Rahmen ist bei weiteren Thermoplasten auch zu beobachten. Glastemperaturverschiebungen um bis zu 40 % wurden beobachtet. Durch die Infiltration mit klaren transparenten Thermoplasten erhält auch der Verbundkörper einen hohen Grad an Transparenz (im nassen, aber nicht durchgehärteten Zustand). Die temperaturinduzierten Reaktionen (beispielsweise der Zerfall von Initiatoren zu Radikalstartern) können bei Temperaturen von bis zu 180 °C durchgeführt werden.

Die erfindungsgemäße Aufgabenstellung wird gelöst durch einen Verbundkörper umfassend Polysaccharid-Aerogel, insbesondere Cellulose-Aerogel, sowie mindestens einen Kunststoff, erhältlich nach dem zuvor beschriebenen erfindungsgemäßen Verfahren. Bei dem Kunststoff kann es sich beispielsweise um einen Duroplasten oder einen Thermoplasten handeln.

Die erfindungsgemäße Aufgabenstellung wird durch die Verwendung von Polysaccharid-Aerogel, insbesondere Cellulose-Aerogel, zur Verstärkung von Kunststoffen in einem Verbundkörper. Die verstärkten Kunststoffe können beispielsweise Thermoplaste oder Duroplaste sein.

### Ausführungsbeispiel 1

Als Faserverstärkungsmaterial wird ein Cellulose-Aerogel mit 5 Gewichts-% Cellulose verwendet. Vor der Infiltration wird die Restfeuchte im Aerogel durch Trocknung im Vakuumtrockenschrank bei 120 °C und 10 mbar, mindestens 3 h durchgeführt. Das vollständig trockene Aerogel wird im vortemperierten Zustand (circa 90 °C warm) mit einem Phenolharz bedeckt und in einen Ofen platziert. Zur Infiltration wird ein Phenol-Formaldehyd-Harz (vorkondensiert, mit 2-Propanol verdünnt) mit einer Viskosität von 2 Pa·s verwendet. Die Infiltration erfolgt ausschließlich durch Kapillarkräfte. Das Arbeiten bei erhöhter Temperatur von 60 bis 80 °C ermöglicht eine Verringerung der Harz-Viskosität, welche die Infiltration beschleunigt. Innerhalb weniger Stunden wird das gesamte Porenvolumen des Aerogels vollständig mit dem Harz gefüllt. Dieser Grünling ist transparent und zeigt keine Lufteinschlüsse, die mit bloßem Auge sichtbar oder mittels Ultraschall nachweisbar sind. Da noch keine Gelation des Harzsystems stattgefunden hat kann dieser Grünkörper nun entnommen und in die gewünschte finale Form gebracht werden. Anschließend findet bei 100 °C im Ofen die Durchhärtung statt. Gegebenenfalls kann hier ein Vakuumaufbau zum Abziehen von überschüssigem Matrixmaterial verwendet werden. Um optimale Eigenschaften seitens der Matrix zu erhalten, wird in der Regel ein Curing nachgeschaltet.

### Ausführungsbeispiel 2

Als Faserverstärkungsmaterial wird ein Cellulose-Aerogel mit 5 Gewichts-% Cellulose verwendet. Vor der Infiltration wird die Restfeuchte im Aerogel durch Trocknung im Vakuumtrockenschrank bei 120 °C und 10 mbar, mindestens 5 h durchgeführt.

Nach Abkühlen auf Raumtemperatur kann das Aerogel weiterverarbeitet werden. Dieses Ausführungsbeispiel umfasst die radikalische Polymerisation von Styrol in der Masse. Styrol enthält handelsüblich Stabilisatoren. Diese können entweder ausgewaschen werden, oder durch einen, an die Stabilisatormenge angepassten Initiatorüberschuss kompensiert werden.

Styrol wird mit mindestens 0,1 % eines geeigneten Initiators versetzt. Als radikalische Initiatoren können z.B. Azoverbindungen wie Azobis(isobutyronitril) (AIBN) oder Peroxide wie (Di-)Benzoylperoxid (DBPO) verwendet werden. Das trockene Aerogel wird bei Raumtemperatur unter Schutzgas in die Lösung getaucht. Innerhalb weniger Minuten wird das gesamte Porenvolumen des Aerogels vollständig mit der Monomer-Lösung gefüllt. Dabei kann beobachtet werden wie Gasblasen aus dem Aerogel aufsteigen. Das Aerogel wird dabei transparent und zeigt keine Lufteinschlüsse, die mit bloßem Auge sichtbar oder lichtmikroskopisch nachweisbar sind. Sobald das gefüllte Aerogel vollständig transparent ist kann dieses (bevorzugt unter Schutzgas) auf eine Temperatur von 70 bis 110 °C aufgeheizt werden um den Initiatorzerfall zu Radikalstartern einzuleiten. Nach Abschluss der Polymerisation wird ein Cellulose-Polystyrol-Composit erhalten, welcher bei einem Cellulosegehalt von 5 Gewichts-% opak bis weislich erscheint.

## Patentansprüche

1. Verfahren zur Herstellung eines Verbundkörpers umfassend Polysaccharid-Aerogel, insbesondere Cellulose-Aerogel, sowie mindestens einen Kunststoff, wobei der Kunststoff und das Polysaccharid-Aerogel stoff- und kraftschlüssig verbunden sind, wobei das Verfahren die folgenden Schritte umfasst:
i) Bereitstellen von Polysaccharid-Aerogel, insbesondere Cellulose-Aerogel, in einem Formkörper
ii) Infiltrieren des Polysaccharid-Aerogels mit einer Polymerisationsflüssigkeit des Kunststoffs und
iii) Aushärten der Polymerisationsflüssigkeit zum Erhalt des Verbundkörpers.

2. Verfahren gemäß Anspruch 1, **dadurch gekennzeichnet, dass** das Polysaccharid-Aerogel in Form von Fasern, insbesondere in Form zweidimensionaler textiler Gebilde wie Vliese und/oder Gewebe und/oder in Form eines dreidimensionalen Netzwerks bereitgestellt wird.

3. Verfahren gemäß Anspruch 1 oder 2, **dadurch gekennzeichnet, dass** die Polymerisationsflüssigkeit frei von Lösungsmitteln ist.

4. Verfahren gemäß einem der Ansprüche 1 bis 2, **dadurch gekennzeichnet, dass** die Polymerisationsflüssigkeit niedrigviskose Monomere, Oligomere und/oder Vorkondensate umfasst, insbesondere frei von Polymeren ist.

5. Verbundkörper umfassend Polysaccharid-Aerogel, insbesondere Cellulose-Aerogel, sowie mindestens einen Kunststoff erhältlich mit einem Verfahren gemäß einem der Ansprüche 1 bis 4.

6. Verbundkörper gemäß Anspruch 5, **dadurch gekennzeichnet, dass** er Polysaccharid-Aerogel, insbesondere Cellulose-Aerogel, in Form von Fasern, insbesondere in Form zweidimensionaler textiler Gebilde wie Vliese und/oder Gewebe und/oder in Form eines dreidimensionalen Netzwerks, umfasst.

7. Verbundkörper gemäß Anspruch 5 oder 6, **dadurch gekennzeichnet, dass** der Verbundkörper frei von Lufteinschlüssen und/oder Lösungsmitteln ist.

8. Verbundkörper gemäß einem der Ansprüche 5 bis 7, **dadurch gekennzeichnet, dass** es sich bei dem Kunststoff um einen thermoplastischen Kunststoff handelt.

9. Verbundkörper gemäß Anspruch 8, **dadurch gekennzeichnet, dass** es sich bei dem Kunststoff um ein Polyacrylat, Polyamid, Polylactid, Polystyrol und/oder Polycarbonat handelt.

10. Verbundkörper gemäß einem der Ansprüche 5 bis 9, **dadurch gekennzeichnet, dass** der Verbundkörper optisch transparent, transluzent und/oder opak bis weißlich ist.

11. Verbundkörper gemäß Anspruch 5 oder 6, **dadurch gekennzeichnet, dass** es sich bei dem Kunststoff um einen duroplastischen Kunststoff handelt.

12. Verbundkörper gemäß Anspruch 11, **dadurch gekennzeichnet, dass** es sich bei dem Kunststoff um Epoxidharze, Phenol-Formaldehyd-Harze, MelaminFormaldehyd-Harze, gesättigte und/oder ungesättigte Polyesterharze, Cyanacrylate und/oder Polyurethane handelt.

13. Verwendung von Polysaccharid-Aerogel, insbesondere Cellulose-Aerogel, in Verfahren gemäß der Ansprüche 1-4 zur Verstärkung von Kunststoffen in einem Verbundkörper.

## Claims

1. Method for producing a composite body comprising a polysaccharide aerogel, especially a cellulose aerogel, and at least one plastic material, in which said plastic material and said polysaccharide aerogel are bonded together by both adhesive and frictional connection, wherein said method comprises the following steps:
i) providing a polysaccharide aerogel, especially cellulose aerogel, in a molded body,
ii) infiltrating said polysaccharide aerogel with a polymerization liquid of said plastic material, and
iii) curing said polymerization liquid to obtain the composite body.

2. Method according to claim 1, **characterized in that** said polysaccharide aerogel is provided in the form of fibers, especially in the form of two-dimensional textile structures sheet fabrics, such as non-wovens and/or woven fabrics and/or in the form of a three-dimensional network.

3. Method according to claim 1 or 2, **characterized in that** said polymerization liquid is free of solvents.

4. Method according to any of claims 1 to 2, **characterized in that** said polymerization liquid comrpises low viscosity monomers, oligomers and/or precondensates, especially is free of polymers.

5. A composite body, including a polysaccharide aerogel, especially a cellulose aerogel, and at least one plastic material, obtainable by a method according to any of claims 1 to 4.

6. Composite body according to claim 5, **characterized in that** it includes a polysaccharide aerogel, especially a cellulose aerogel, in the form of fibers, especially in the form two-dimensional textile structures of sheet fabrics, such as non-wovens and/or woven fabrics and/or in the form of a three-dimensional network.

7. Composite body according to claim 5 or 6, **characterized in that** said composite body is free of air inclusions and/or solvents.

8. Composite body according to any of claims 5 to 7, **characterized in that** said plastic material is a thermoplastic material.

9. Composite body according to claim 8, **characterized in that** said plastic material is a polyacrylate, polyamide, polylactide, polystyrene, and/or polycarbonate.

10. Composite body according to any of claims 5 to 9, **characterized in that** said composite body is optically transparent, translucent, and/or opaqued to whitish.

11. Composite body according to claim 5 or 6, **characterized in that** said plastic material is a thermosetting material.

12. Composite body according to claim 11, **characterized in that** said plastic material is epoxy resins, phenol-formaldehyde resins, melamine-formaldehyde resins, saturated and/or unsaturated polyester resins, cyanoacrylates, and/or polyurethanes.

13. Use of a polysaccharide aerogel, especially cellulose aerogel, in methods according to claims 1-4 for reinforcing plastic materials in a composite body.

## Revendications

1. Procédé pour produire un corps composite comprenant un aérogel de polysaccharide, notamment aérogel de cellulose, et au moins un plastique, dans lequel ledit plastique et ledit aérogel de polysaccharide sont reliés par une connexion à la fois adhésive et frictionnelle, ledit procédé comprenant les étapes suivantes consistant à :
procurer un aérogel de polysaccharide, notamment aérogel de cellulose, sous forme de corps moulé,
infiltrer ledit aérogel de polysaccharide avec un liquide de polymérisation dudit plastique, et
faire durcir ledit liquide de polymérisation pour obtenir ledit corps composite.

2. Procédé selon la revendication 1, **caractérisé en ce que** ledit aérogel de polysaccharide est procuré sous la forme de fibres, notamment sous la forme de tissu textile bidimensionnelles telles que des non tissés et/ou les tissus et/ou sous la forme d'un réseau tridimensionnel.

3. Procédé selon la revendication 1 ou 2, **caractérisé en ce que** ledit liquide de polymérisation est exempt de solvants.

4. Procédé selon l'une quelconque des revendications 1 à 2, **caractérisé en ce que** ledit liquide de polymérisation comprend des Monomères, oligomères et/ou précondensat à basse viscosité, notamment est exempt de polymères.

5. Corps composite comprenant un aérogel de polysaccharide, notamment aérogel de cellulose, et au moins un plastique, pouvant être obtenu par un procédé selon l'une quelconque des revendications 1 à 4.

6. Corps composite selon la revendication 5, **caractérisé en ce qu'**il comprend un aérogel de polysaccharide, notamment de cellulose, sous la forme de fibres, notamment sous la forme de tissu textile bidimensionnelles telles que des non tissés et/ou les tissus et/ou sous la forme d'un réseau tridimensionnel.

7. Corps composite selon la revendication 5 ou 6, **caractérisé en ce que** ledit corps composite est exempt d'inclusions d'air et/ou de solvants.

8. Corps composite selon l'une quelconque des revendications 5 à 7, **caractérisé en ce que** ledit plastique est une résine thermoplastique.

9. Corps composite selon la revendication 8, **caractérisé en ce que** ledit plastique est un polyacrylate, un polyamide, un polylactide, un polystyrène et/ou un polycarbonate.

10. Corps composite selon l'une quelconque des revendications 5 à 9, **caractérisé en ce que** ledit corps composite est optiquement transparent, translucide et/ou opaque à blanchâtre.

11. Corps composite selon la revendication 5 ou 6, **caractérisé en ce que** ledit plastique est une matière thermodurcissable.

12. Corps composite selon la revendication 11, **caractérisé en ce que** ledit plastique est des résines époxydes, des résines phénol-formaldéhyde, des résines mélamine-formaldéhyde, des résines de polyester saturées et/ou insaturées, des cyanoacrylates, et/ou des polyuréthanes.

13. Utilisation d'aérogel de polysaccharide, notamment d'aérogel de cellulose, dans des procédés selon les revendications 1-4 pour renforcer des plastiques dans un corps composite.
